Europäisches Patentamt

European Patent Office

Office européen des brevets

(19)

(11) EP 1 026 851 A1

## (12) EUROPEAN PATENT APPLICATION

(43) Date of publication:
09.08.2000 Bulletin 2000/32

(51) Int Cl.7: H04L 9/30

(21) Application number: 99300803.6

(22) Date of filing: 03.02.1999

(84) Designated Contracting States:
AT BE CH CY DE DK ES FI FR GB GR IE IT LI LU MC NL PT SE
Designated Extension States:
AL LT LV MK RO SI

(71) Applicant: Hewlett-Packard Company
Palo Alto, California 94304 (US)

(72) Inventor: Smart, Nigel Paul
Chipping Sodbury, Bristol BS37 6JF (GB)

(74) Representative:
Lawman, Matthew John Mitchell et al
Hewlett-Packard Limited,
IP Section,
Building 2,
Filton Road
Stoke Gifford, Bristol BS34 8QZ (GB)

(54) Composite cryptographic keys

(57) The present invention relates to the generation of a composite cryptographic key. In one example, we show how to specify an elliptic curve public key, an RSA public key and a DSA public key all in a single 2048 bit block. The method gives a wide choice of finite fields and curves for use in the ECC system and introduces no known security weaknesses. The method hence allows algorithm type to be decided at run time, rather than at the time the public keys are distributed. However, this is done without the need for very large key lengths.

30

DETERMINE SCONDARY KEY PORTION(S) Y

31 COMPUTE R'=Y*d$^L$ OF LENGTH m

32 SELECT RANDOM PRIME p OF LENGTH AT MOST L

33 ROUND R' TO NEAREST MULTIPLE OF p

34 SELECT q' SUCH THAT R'=p*q'

35 FIND SMALLEST NON-NEGATIVE INTEGER t SUCH THAT q=q'+t IS PRIME

36 IS R=p*q OF THE FORM Y ∥ y? — N

Y

37 RETURN R, p, q

38 END

Figure 4

EP 1 026 851 A1

**Description**

<u>Technical Field</u>

The present invention relates to cryptographic keys and particularly, although not exclusively, to methods for generating cryptographic keys.

<u>Background Art</u>

Suppose Alice wishes to publish her public cryptographic key in some directory so that someone else, say Bob, can verify Alice's digital signatures, or send Alice secret messages. At present, Alice first has to decide on which of the three standard public cryptographic key algorithms to use: RSA, DSA or ECC. Given this, Alice then passes to a cryptographic key directory, or Certification Authority (CA), the bit pattern which represents her public cryptographic key for that given algorithm. If Alice wished to keep the choice of algorithm open, until the cryptographic key was actually used, then she would need to give the bit patterns of all three independent public cryptographic keys.

Such a situation could arise where we do not know how the public cryptographic key is to be used. For example, if Bob is going to verify signatures from Alice, or send messages to Alice, using a small constrained device, then RSA is probably to be preferred as the public cryptographic key operations are relatively much faster with RSA. If however, Alice's operations, whether signing or decryption, are to be performed on a small constrained device, then ECC is probably to be the preferred option. There may also be some situations where DSA is the preferred option.

In any case, if Alice wishes to make available all three public cryptographic keys in the directory, then, with current recommendations for cryptographic key sizes, she will require 1024 bits to specify her RSA cryptographic key, another 1024 bits to specify her DSA cryptographic key (assuming a pre-agreed finite field is used) and another 170 bits to specify an ECC public cryptographic key (assuming a pre-agreed curve is used). Hence, a total of 2218 bits are required.

If the system requires that users should use different finite fields for DSA or different curves for ECC, then the number of bits required increases to at least 3500. In fact, Alice may prefer to use elliptic curves over odd characteristic fields, since she may be using a PC-based environment to perform her operations in. On the other hand, another user may prefer elliptic curves over even characteristic fields, since they may be using a dedicated hardware device. It is also known that using the same finite field for DSA over a large number of users creates an attractive weakness, which could be exploited by an admittedly rich adversary, who has access to an extremely powerful computing platform. If all three cryptographic keys where stored in their standardised ASN.1 notation, then the amount of storage required would be even larger.

Another problem with using separate cryptographic keys occurs in the (admittedly) unlikely event that one of the three main public cryptographic key algorithms falls to an, as yet, unknown attack. If this "doomsday" scenario occurred, then all public cryptographic keys, and the associated public cryptographic key infrastructure, would need to be revoked and re-deployed for all cryptographic keys which used the given public cryptographic key algorithm. If all three public cryptographic key were published, then the public cryptographic key infrastructure would not need to be revoked and re-deployed and users would just switch from using the insecure algorithm to one of the secure ones. Admittedly, legacy signatures could then be forged (we shall not address this problem herein, but note it can be solved using a trusted time stamping authority).

For convenience, therefore, for the above-mentioned reasons, it would be desirable to publish multiple cryptographic keys. However, the downside of this is the storage overhead for CAs, which would increase substantially.

<u>Disclosure of the Invention</u>

The present invention aims to overcome the increase in storage requirement required for publishing multiple cryptographic keys.

In accordance with a first aspect, the present invention provides a method of generating a composite cryptographic key comprising plural cryptographic key portions in such a way that the cryptographic key portions can be recovered from the composite cryptographic key, wherein the bit length of the composite cryptographic key is less than the sum of the bit lengths of the plural cryptographic key portions.

In accordance with a second aspect, the present invention provides a method of generating a composite cryptographic key composed of a primary cryptographic key and one or more secondary cryptographic key portions, by specifying the or each secondary cryptographic key portion and generating a primary cryptographic key such that embedded therein there is a predetermined portion comprising the or each secondary cryptographic key portion.

Advantageously, the composite cryptographic key is typically shorter in length than the sum of the lengths of the individual cryptographic keys comprised in the composite cryptographic key. It is therefore possible to publish multiple cryptographic keys, using the composite cryptographic key, without incurring too great a storage overhead increase. For example, in the three-cryptographic key scenario above, the storage requirement for all three cryptographic keys, were they all to be published, would normally be 2218 bits. As described in the detailed description below, the same three cryptographic keys can be combined into a composite cryptographic key comprising only 2048 bits, which represents nearly a 10% storage saving.

The present invention takes advantage of a well-known principle, having a number of different implementations, which allows for the generation of a cryptographic key containing a certain pre-determined portion. Hitherto, uses of such a technique have been stated as to allow all members of a group of users to share some fixed number of bits of their RSA moduli, or to allow users to include a binary representation of their personal data in their RSA modulus [1].

In accordance with a third aspect, the present invention provides a method of digitally signing data, comprising the steps of:

using at least one private cryptographic key to sign the data;
providing a composite cryptographic key as defined above, the composite cryptographic key comprising plural different public cryptographic key portions that correspond to the private cryptographic key or keys; and
making the composite cryptographic key available for use by third parties.

By signing the data with more than one cryptographic key in parallel, for example, Alice can ensure that the signatures remain valid until the last of the algorithms is made insecure. For electronic legal documents, for instance, that are needed to remain in force over many years (or even decades), this provides added security.

In accordance with a fourth aspect, the present invention provides a method of encrypting data, comprising extracting plural different public cryptographic key portions from a composite cryptographic key, the composite cryptographic key having been generated as defined above, encrypting the data and then re-encrypting the data using at least two different ones of the cryptographic key portions.

Thus, for example, encryption can be double or triple-locked using multiple public encryption cryptographic keys extracted from the composite cryptographic key.

In accordance with a further aspect, the present invention provides a method of publishing plural public cryptographic key portions by generating a composite cryptographic key as defined above and then publishing the composite cryptographic key.

A further advantage of implementing a composite cryptographic key according to the present invention is that, say, ECC can be used to perform Alice's signature operations and RSA can be used to perform her decryption operations, since it is not considered good practice to use the same cryptographic key for both signing and decryption. By using the composite cryptographic key, one uses the same public cryptographic key but in two different contexts.

Brief Description of the Drawings

Embodiments of the present invention will now be described by way of example only with reference to the accompanying drawings:

Figure 1 is a table of integers n and c which produce a prime number $q = 2^n + c$;
Figure 2a is a diagram which illustrates a process for digitally signing data using multiple cryptographic keys;
Figure 2b is a diagram which illustrates a process of verifying that data has been digitally signed according to Figure 2a;
Figure 3a is a diagram which illustrates a process of encrypting data using multiple cryptographic keys extracted from a composite cryptographic key;
Figure 3b is a diagram which illustrates a process of decrypting data that has been encrypted according to Figure 3a; and
Figure 4 is a flow diagram, which illustrates one way of embedding a pre-defined portion into an RSA cryptographic key.

Best Mode For Carrying Out the Invention, & Industrial Applicability

The following text describes how to embed an RSA cryptographic key, a DSA cryptographic key and an ECC cryptographic key into one 2048 bit string. Such a string has a wide choice of finite fields to use for ECC, no restriction on which curve to use over this finite field and a virtually unique finite field in which to implement DSA.

The algorithms described herein are described in sufficient detail to enable the skilled person to implement them in software, using standard cryptographic library routines, or in hardware. Further, only the algorithms for forming a composite cryptographic key are described herein. The algorithms for extracting cryptographic keys from a composite cryptographic key are merely the reverse of the algorithms used for forming the composite cryptographic key, and, therefore, are not considered herein.

Initially, the elliptic curve public cryptographic key will be specified, then the DSA public cryptographic key and finally the RSA public cryptographic key. Herein, n denotes the number of bits of security in the ECC public cryptographic key and m denotes the number of bits of security in the RSA public cryptographic key. The DSA cryptographic key is a field of order around $2^m$ with a multiplicative subgroup of order around $2^n$.

The present technique works in two main stages. First, the elliptic curve parameters and cryptographic keys are produced in a way which means they occupy as few a number of bits as possible. Secondly, the bit pattern of the elliptic curve cryptographic key is embedded into an RSA cryptographic key using a technique of Lenstra [1], examples of which will be described at the end of this description.

In summary, the technique allows a relatively short bit string to be interpreted as a variety of public cryptographic keys for different algorithms. This allows additional functionality of the public cryptographic key infrastructure:

by allowing users to decide which public cryptographic key algorithm to use dynamically rather than having this dictated by the entity deploying the public cryptographic key infrastructure;

by allowing the algorithm choice to depend on the environment rather than on the identity of the user;

by providing the ability to cope with the scenario of a public cryptographic key system being declared weak; and

by providing a mechanism to triple-lock an encryption or triple-sign a message with only relatively small cryptographic key size, thus giving added security over a longer period of time.

In addition, other independent benefits arise from the proposed method of creating ECC cryptographic keys and ECC system parameters with a small amount of space. For example, the current ASN.1 definition of elliptic curve parameters and cryptographic keys in X9.62 [4] means that cryptographic keys can take up a lot of bandwidth. This can be a problem, given that ECC will typically be used in small, constrained devices, where bandwidth is a problem. Using the small cryptographic key lengths derived from the present technique, one can achieve the benefit of users using different fields and curves without the disadvantages of pre-agreement and/or increased bandwidth.

The remainder of this description will use the following notation. If x and y are bit strings, let x||y denote the concatenation of the bit strings. If x is a bit string, let {x} denote the number or finite field element represented by x (with least significant bit last) and, for a number or finite field element y, let [y] denote the bit string which represents y.

The Elliptic Curve Public Cryptographic key

By way of background, elliptic curves are described in detail in the book [2] and in [4].

The Finite Field

Firstly, the finite field to use must be specified and whether it is of even or odd characteristic. It is necessary to select an elliptic curve, E, over a field $F_q$ of order around $2^n$. Note that in all current practical elliptic curve systems, one would choose $150 \leq n \leq 255$.

To specify an even characteristic field can then be done in the 8 bits needed to represent n, assuming an Optimal Normal Basis is used to represent the field elements. Alternatively, if the fields are restricted to those with a trinomial basis, then, we can represent the field using

$$X^n + X^c + 1$$

so another 8 bits are required to represent c. In practice, it is common to take n to be odd in this situation, which is the case in this example (for reasons to become apparent hereafter). Hence, to specify the even characteristic field requires at most 15 bits, since it is assumed n is always odd.

For reasons of efficiency, in many systems for odd characteristic fields, fields of prime order equal to the following are used

$$q = 2^n + c$$

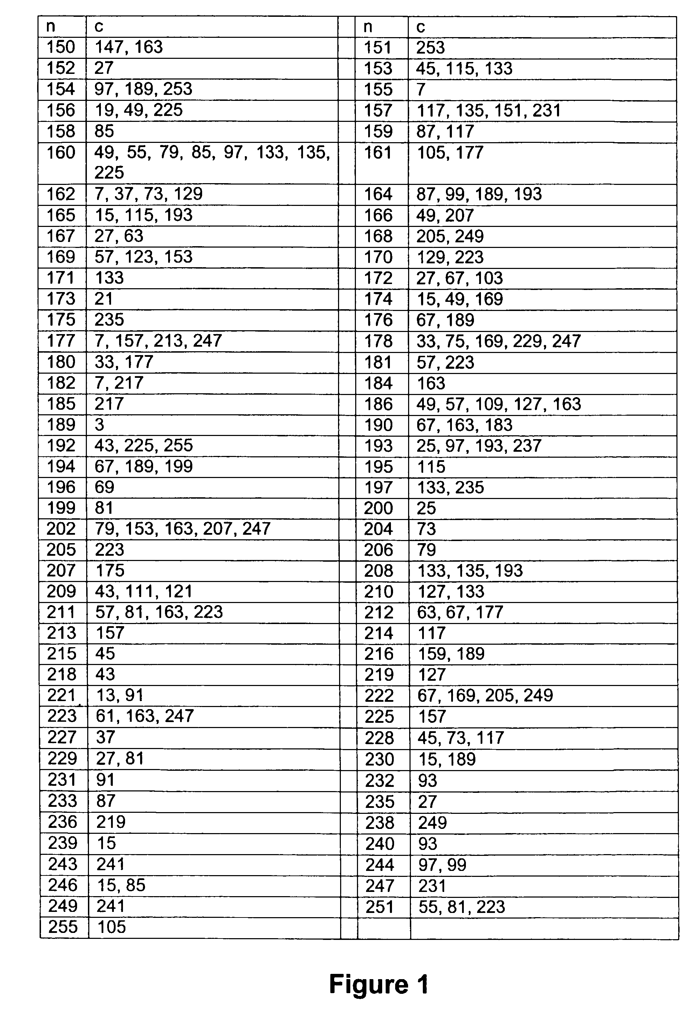

If c is small, this gives a very efficient way of performing the field operations with no known loss of security. For convenience and efficiency, the present example will be restricted to fields of the above form with $150 \leq n \leq 255$ and $1 \leq c \leq 255$. There are 174 such primes with $150 \leq n \leq 255$ and $1 \leq c \leq 255$, which are listed in the table in Figure 1. Hence, there is a greater choice of odd characteristic fields than even characteristic fields. In addition, 15 bits are required to represent q, 8 bits for n and 7 bits for c, since clearly c must be odd.

Since both odd and even fields can be represented using 15 bits the choice of field can be represented in 16 bits by using a single additional bit to specify whether the field is an odd or even case. Herein, the resulting bit string shall be represented as f.

The Elliptic Curve

Having chosen a field, an elliptic curve is then found over $F_q$ using Schoof's algorithm [3]. It should be noted that a special elliptic curve is not being specified herein and so security is not being compromised. The elliptic curve is given by an equation of the form

$$Y^2 = X^3 + a X + b \qquad q \text{ odd,}$$

$$Y^2 + XY = X^3 + a_2 X^2 + a_6 \qquad q \text{ even}$$

Since, in the even characteristic case, n is chosen to be odd, $a_2 \in \{0, 1\}$ can be chosen.

In the odd characteristic case it can be assumed that a will fit in an eight bit word. To see why this is so, it can be seen that $Y^2 = X^3 + aX + b$ is isomorphic to $Y^2 = X^3 + au^4X + bu^6$ for some $u \in F_q$. Now, if $q \equiv 1 \pmod 4$, then there is a 25 percent chance of replacing a by any number a', by simply trying to extract the fourth root of a'/a. If $q \equiv 3 \pmod 4$, then there is an even better chance, namely 50 percent, of this working for any given a'. If a is specified by only 8 bits, then there is, at most a

$$0.75^{256} \approx 10^{-32}$$

chance that the curve found by Schoof's algorithm cannot be put in a form with a $\notin \{1, \dots , 256\}$. In this unlikely situation, it is clearly possible to attempt to find another curve.

Since b and $a_6$ both require n bits to specify them, the elliptic curve E can be represented using only n+8 bits. The resulting string is represented as e.

The Group Order

It is assumed that the curve order is divisible by a large prime l and

$$N_q = \#E(F_q) = \begin{cases} l & q \text{ odd} \\ 2l & q \text{ even and } a_2 = 1 \\ 4l & q \text{ even and } a_2 = 0 \end{cases}$$

This is common practice and such elliptic curves are quite easy to find using Schoof's algorithm for the values of q in use today. By Hasse's theorem we have that $t = q + 1 - \#E(F_q)$ is bounded by $|t| \leq 2\sqrt{q}$. Hence, to specify the group order, and hence l, requires 2+n/2 bits. The resulting bit string we denote by o.

The Generating Point

Now will be specified a point which generates a subgroup of order l. A random bit string x of length 7 is selected and the field element {x} represented by x is considered. With probability 1/2, a field element $y \in F_q$ such that $(\{x\}, y) \in E(F_q)$ can be determined. If

$$P = [N_q/l] (\{x\}, y)$$

is computed, then, with probability around $2^{2-n}$, P = O and this value of x is rejected and the process is started again. Otherwise, a point P is found which is a non-trivial element of order I in $E(F_q)$. So, the generating point, P, can be represented by compressing the elliptic curve point ($\{x\}$, y) into a bit string, p, of length 8 bits. With overwhelming probability, such a method is practically guaranteed to find a suitable generating point.

The Public Cryptographic key

Finally, a public cryptographic key needs to be constructed. A random number, k, is produced, the private cryptographic key, with 1 < k < I and the public cryptographic key is computed

$$Q = [k]P$$

By compressing Q, in the standard way as described in [4], Q can be represented by a bit string q of length at most n+1 bits.

Hence, to represent all the parameters of the elliptic curve public cryptographic key, the bit string

$$X = f \parallel e \parallel o \parallel p \parallel q$$

of length t = 16 + (n + 8) + (2 + n/2) + 8 + (n+1) = 35 + 5n/2 bits is required.

Although not necessarily so efficient, there are many other ways of compressing an elliptic curve cryptographic key, that will be obvious to the skilled person in the light of the above description, for example the standard compression technique in [4].

The DSA Public Cryptographic key

Using the prime I from above, which is of order $2^n$, it is possible to form the number

$$T = I \{X\}^{[(m-n)/t] + 1} + 1$$

Since $\{X\}$ is a number of bit length t, the bit length of T is

$$\log_2(T) \approx \log_2(I) + \frac{m-n}{t} \log_2\{X\} \approx n + m - n = m$$

Next, I is repeatedly added onto T until a prime number, P = T + λI is obtained. By the prime number theorem such a prime number will occur, on average, after m such additions, so it can be assumed that the bit length of A is log2m. The resulting prime P will be the field in which the DSA public cryptographic key lies; clearly, it is deterministically derived from the bit string X, and the prime I will divide P-1. It can be assumed that $I^2$ does not divide P-1, which is such a rare event that for practical purposes can be ignored.

Next can be chosen a random number g of bit length less than 8, and

$$h \equiv g^{(P-1)/I} \quad (\text{mod } P)$$

can be computed. With probability $2^{-n}$, one is obtained, in which case another random g of bit length less than 8 is chosen and the calculation is repeated until h is not equal to one. The number h is then a generator of the subgroup of $F_P$ of order I.

The DSA public cryptographic key is then the number

$$z = h^k \quad (\text{mod } P)$$

It should be noted that the same private cryptographic key is used for both the ECC and DSA schemes. This is not necessary and is done for convenience of description herein. However, use of the same private cryptographic key means the holder of the private cryptographic key is less likely to forget which private cryptographic key corresponds to ECC and which to DSA.

Finally, Z is used to denote the bit string [z] of length approximately m bits, and Y is set as follows

$$Y = X \parallel [\lambda] \parallel [g]$$

So, Y is a bit string of length $K = 43 + 5n/2 + \log_2 m$ bits.

The RSA Public Cryptographic key

As described below, and in more detail in [1], an m bit RSA modulus, N, can be constructed, which contains the bit string Y as either the leading or trailing portion of [N]. This is possible assuming

$$m > 86 + 5n + 2\log_2 m.$$

A common choice of 65537 is made for the public exponent. Finally, all three public cryptographic keys are represented by the bit string

$$[N] \parallel Z$$

of length 2m. In practice, typical values of n = 160 and m = 1024 as used, which satisfy the above inequality with ease.

Security

Clearly, if the above scheme is followed, the choice of elliptic curve parameters do not affect the security of the system. Neither does the choice of DSA parameters, although the choice of such a value of P could possibly lead to small degradations in performance when compared to sparse values of P used in some reported DSA signature implementations.

The discussion in [1] should convince the reader that the resulting RSA public cryptographic keys provide no loss in security compared to more general RSA moduli.

Generating an RSA Cryptographic key With a Pre-determined Portion

In the following description, $d \in Z_{>1}$ denotes a fixed radix. A "digit" refers to a digit in the radix d representation. For a positive integer r its length |r| refers to the length of r's radix d representation with non-zero leading digit.

The length of the RSA modulus R to be constructed is denoted by m, the length of the pre-determined portion Y of R is denoted by K with K < m, and L = m - K. As before, the concatenation of two arrays of digits $a_1$ and $a_0$ is denoted $a_1 \parallel a_0$. Below, methods are presented to construct RSA moduli with radix d representation $s \parallel r$ and $r \parallel s$. [1] further presents other RSA moduli, including $s_1 \parallel r \parallel s_0$.

By Fixing the leading digits of R

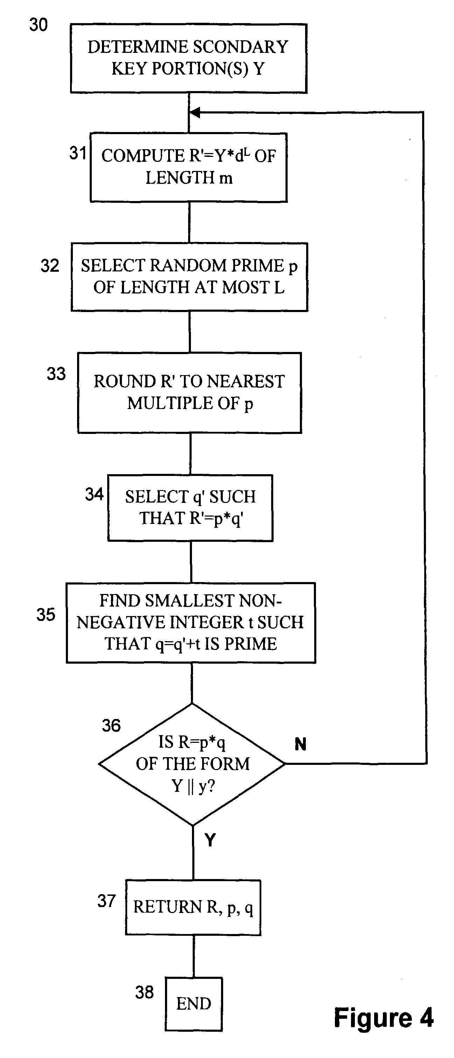

With reference to Figure 4, in step 30, let Y be a number of length K; in this case Y is the pre-defined portion comprising one or more cryptographic keys. Then, the number $R' = Y * d^L$ of length m is computed in step 31. Next, in step 32, a random prime p of length at most L is picked and R' is rounded up to the nearest multiple of p in step 33. q' is an integer selected in step 34 such that R' = p * q'. In step 35, the smallest non-negative integer t is found such that q = q' + t is prime. If the resulting R = p * q is found to be of the form $Y \parallel r$ in step 36, then R, p and q are returned in step 37 and the process ends in step 38; otherwise, the process returns to step 31 with the same Y.

Alternatively By Fixing the trailing digits of n

Let Y be an array of K digits that corresponds to an odd number (where Y may have leading digits zero). First, a random prime p of length at most L and a random number x of length L-|p| are picked. Next, let $q' = x * d^K + ((Y/p)$

mod $d^K$) and let R' = p * q'. Finally, the smallest non-negative integer such that q' + t * $d^K$ is prime is found, and let q = q' + t * $d^K$. If the resulting R = p * q has length m, then R, p and q are returned and the process ends; otherwise the process is started again with the same s.

The present invention relies on the well-known principle, of embedding a pre-determined portion into another cryptographic key, which is applied as described herein in a novel way to provide an advantageous result: the concept of a composite cryptographic key. While two examples of embedding pre-determined strings in an RSA modulus are described above, there are clearly other ways of achieving the same end [1], albeit in less efficient ways. Furthermore, it is known to embed pre-determined portions into other types of cryptographic key, for example DSA cryptographic keys [5]. It is clearly, therefore, feasible to embed one or more other cryptographic keys into a DSA cryptographic key. On the basis of the present disclosure, the skilled person would be able to use any known, or yet to be discovered, algorithm for embedding a pre-determined portion into a cryptographic key, to form a composite cryptographic key.

Signing Data Using Multiple cryptographic keys

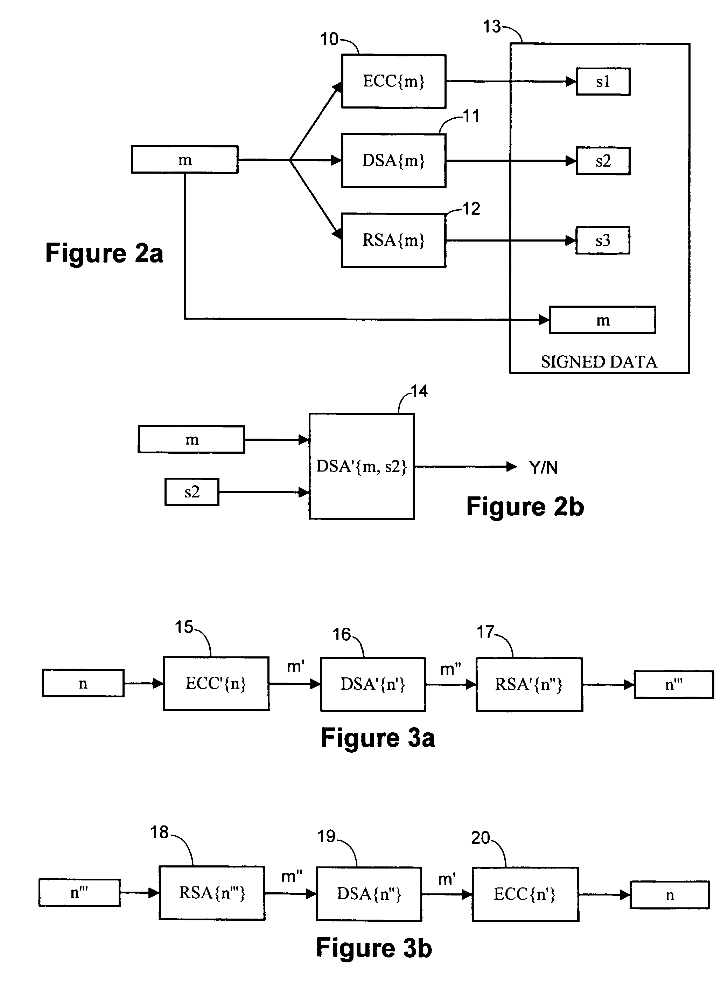

Figure 2a illustrates an exemplary process of digitally signing data, in this case a document m, by taking advantage of a composite cryptographic key. The document m is passed by a sender to three encryption engines, ECC 10, DSA 11 and RSA 12. The encryption engines 10, 11 and 12, use respective private cryptographic keys to sign the document, producing three signatures s1, s2 and s3 respectively. Finally, the signed data m, s1, s2 and s3 are, for example, passed to a recipient or published.

Independently, public cryptographic keys that correspond to the private cryptographic keys are used by the sender to generate a composite cryptographic key, as described above, and the composite cryptographic key is published.

On receipt of the signed data, a recipient retrieves the composite cryptographic key and extracts the public cryptographic keys therefrom. The recipient then need only use one of the public cryptographic keys, for example DSA' to verify the origin of the document m, using an authentication engine 14 as illustrated in Figure 2b.

Clearly, in the event that one of the cryptographic infrastructures, for example the DSA infrastructure, becomes unsafe to use, the recipient would not use the public cryptographic key for that infrastructure to verify the document m, and would have the option of using one of the other two public cryptographic keys.

Obviously, any appropriate combination and number of different cryptographic keys may be used to sign data.

Encrypting Data Using Multiple cryptographic keys

Figure 3a illustrates an exemplary process for 'triple-locking' data, in this case a document n, by taking advantage of a composite cryptographic key.

A sender wishing to send the document n to a recipient in a secure manner retrieves a composite cryptographic key published by the recipient. The sender extracts multiple public cryptographic keys from the composite cryptographic key and encrypts the document using each public cryptographic key in turn. Specifically, the sender encrypts the document n using: an ECC' encryption engine 15 to produce encrypted document n'; a DSA' encryption engine 16 to produce an encrypted document n''; and an RSA' encryption engine to produce an encrypted document n'''. The encrypted document n''' is said to be triple-locked. Finally, the sender transmits the document, for example via e-mail, to the recipient.

The recipient receives the document and decrypts it using a reverse process, as illustrated in Figure 3b. Specifically, the recipient decrypts the document n''' using: an RSA decryption engine 18 to produce a double-locked document m''; a DSA decryption engine 19 to produce a single-locked document n'; and an ECC decryption engine to return the original document n.

Clearly, the triple-locked document n''' would be considered safe even if two of the three cryptographic infrastructures became unsafe to use.

Obviously, any appropriate combination and number of different cryptographic keys may be used to encrypt data.

References

[1] A. Lenstra, "Generating RSA moduli with a predetermined portion", Advances in Cryptography, ASIACRYPT 98, 1-10. Springer - Verlag, LNCS 1514, 1998.

[2] A. J. Menezes, "Elliptic Curve Public Cryptographic key Cryptosystems", Kluwer, 1993

[3] R. Schoof, "Elliptic curves over finite fields and the computation of square roots mod p", Math. Comp., 44, 483-494, 1985.

[4] ANSI X9.62, "Public Cryptographic key Cryptography for the financial services Industry: The Elliptic Curve Digital Signature Algorithm (ECDSA)", Draft Standard, 1998.

[5] Naccache, M'Raihi, Vaudenay and Raphaeli, "Can DSA be Improved ? - Complexity trade-offs with the Digitial Signature Standard.", Advances in Cryptology - EuroCrypt 94", editor A. De Santis, Springer-Verlag, Lecture Notes in Computer Science Vol 950, pages 77--85, (1995).

**Claims**

1.  A method of generating a composite cryptographic key comprising plural cryptographic key portions in such a way that the cryptographic key portions can be recovered from the composite cryptographic key, wherein the bit length of the composite cryptographic key is less than the sum of the bit lengths of the plural cryptographic key portions.

2.  A method of generating a composite cryptographic key composed of a primary cryptographic key and one or more secondary cryptographic key portions, by specifying the or each secondary cryptographic key portion and generating a primary cryptographic key such that embedded therein there is a predetermined portion comprising the or each secondary cryptographic key portion.

3.  A method according to claim 2, wherein the primary cryptographic key comprises an RSA cryptographic key having embedded therein a predetermined portion comprising the or each secondary cryptographic key portion.

4.  A method according to claim 2 or claim 3, wherein a secondary cryptographic key portion comprises an elliptic curve cryptographic key.

5.  A method according to claim 4, wherein the elliptic curve cryptographic key is compressed for the purpose of being embedded in the primary cryptographic key.

6.  A method according to claim 5, wherein the elliptic curve cryptographic key is compressed by reducing the bit length of the generating point representation.

7.  A method according to claim 6, wherein, for a given elliptic curve E over a given finite field $F_q$, the elliptic curve generating point P is generated by a process comprising the steps:

    (a) compute x, a random string of bit length less than or equal to seven;
    (b) determine whether a corresponding y exists, where $y \in F_q$ such that $(\{x\}, y) \in E(F_q)$
    (c) if y does not exist, return to (a), otherwise continue with (d)
    (d) compute the generating point $P = [N_q/l] (\{x\}, y)$
    (e) determine whether P = O
    (f) if P = O, return to (a), otherwise continue with (g)
    (g) use (x, y) to represent the generating point P.

8.  A method according to any one of claims 2 to 7, wherein a secondary cryptographic key portion comprises a DSA cryptographic key portion.

9.  A method according to claim 8, wherein the DSA cryptographic key portion is compressed for the purposes of being embedded in the primary cryptographic key.

10. A method according to claim 9, wherein the DSA cryptographic key portion generator h is generated by a process comprising the steps:

    (a) compute a random number g of bit length less than or equal to eight;
    (b) compute $h = g^{(p-1)/l} \pmod P$;
    (c) if h = 1, return to (a), otherwise h represents the generating point.

11. A method according to any one of claims 2 to 10, wherein there are both elliptic curve and DSA secondary cryptographic key portions, and wherein the cryptographic key portions share a common private cryptographic key.

**12.** A method of digitally signing data, comprising the steps of:

using at least one private cryptographic key to sign the data;
providing a composite cryptographic key generated as claimed in any one of the preceding claims, the composite cryptographic key comprising plural different public cryptographic key portions that correspond to the private cryptographic key or keys; and
making the composite cryptographic key available for use by third parties.

**13.** A method of verifying the origin of data signed according to the method of claim 12, comprising extracting the different public cryptographic key portions from the composite cryptographic key and using at least one of the different public cryptographic key portions to verify the origin of the signed data.

**14.** A method of encrypting data, comprising extracting plural different public cryptographic key portions from a composite cryptographic key, the composite cryptographic key having been generated in accordance with any one of claims 1 to 11, encrypting the data and then re-encrypting the data using at least two different ones of the cryptographic key portions.

**15.** A method of publishing plural public cryptographic keys by generating a composite cryptographic key according to any one of claims 1 to 11 and then publishing the composite cryptographic key.

| n | c | | n | c |
|---|---|---|---|---|
| 150 | 147, 163 | | 151 | 253 |
| 152 | 27 | | 153 | 45, 115, 133 |
| 154 | 97, 189, 253 | | 155 | 7 |
| 156 | 19, 49, 225 | | 157 | 117, 135, 151, 231 |
| 158 | 85 | | 159 | 87, 117 |
| 160 | 49, 55, 79, 85, 97, 133, 135, 225 | | 161 | 105, 177 |
| 162 | 7, 37, 73, 129 | | 164 | 87, 99, 189, 193 |
| 165 | 15, 115, 193 | | 166 | 49, 207 |
| 167 | 27, 63 | | 168 | 205, 249 |
| 169 | 57, 123, 153 | | 170 | 129, 223 |
| 171 | 133 | | 172 | 27, 67, 103 |
| 173 | 21 | | 174 | 15, 49, 169 |
| 175 | 235 | | 176 | 67, 189 |
| 177 | 7, 157, 213, 247 | | 178 | 33, 75, 169, 229, 247 |
| 180 | 33, 177 | | 181 | 57, 223 |
| 182 | 7, 217 | | 184 | 163 |
| 185 | 217 | | 186 | 49, 57, 109, 127, 163 |
| 189 | 3 | | 190 | 67, 163, 183 |
| 192 | 43, 225, 255 | | 193 | 25, 97, 193, 237 |
| 194 | 67, 189, 199 | | 195 | 115 |
| 196 | 69 | | 197 | 133, 235 |
| 199 | 81 | | 200 | 25 |
| 202 | 79, 153, 163, 207, 247 | | 204 | 73 |
| 205 | 223 | | 206 | 79 |
| 207 | 175 | | 208 | 133, 135, 193 |
| 209 | 43, 111, 121 | | 210 | 127, 133 |
| 211 | 57, 81, 163, 223 | | 212 | 63, 67, 177 |
| 213 | 157 | | 214 | 117 |
| 215 | 45 | | 216 | 159, 189 |
| 218 | 43 | | 219 | 127 |
| 221 | 13, 91 | | 222 | 67, 169, 205, 249 |
| 223 | 61, 163, 247 | | 225 | 157 |
| 227 | 37 | | 228 | 45, 73, 117 |
| 229 | 27, 81 | | 230 | 15, 189 |
| 231 | 91 | | 232 | 93 |
| 233 | 87 | | 235 | 27 |
| 236 | 219 | | 238 | 249 |
| 239 | 15 | | 240 | 93 |
| 243 | 241 | | 244 | 97, 99 |
| 246 | 15, 85 | | 247 | 231 |
| 249 | 241 | | 251 | 55, 81, 223 |
| 255 | 105 | | | |

# Figure 1

**Figure 2a**

```
                                    10                    13
                              ┌──────────┐         ┌─────────────────────────┐
                        ┌────▶│  ECC{m}  │────────▶│  ┌────┐                  │
                        │     └──────────┘         │  │ s1 │                  │
                        │            11            │  └────┘                  │
              ┌──────┐  │     ┌──────────┐         │  ┌────┐                  │
              │  m   │──┼────▶│  DSA{m}  │────────▶│  │ s2 │                  │
              └──────┘  │     └──────────┘         │  └────┘                  │
                  │     │            12            │  ┌────┐                  │
                  │     └────▶│  RSA{m}  │────────▶│  │ s3 │                  │
                  │           └──────────┘         │  └────┘                  │
                  │                                │                          │
                  │                                │      ┌──────┐            │
                  └───────────────────────────────┼─────▶│  m   │            │
                                                   │      └──────┘            │
                                                   │      SIGNED DATA         │
                                                   └─────────────────────────┘
```

```
                                    14
        ┌──────┐              ┌──────────────┐
        │  m   │─────────────▶│              │
        └──────┘              │ DSA'{m, s2}  │────────▶  Y/N
        ┌──────┐              │              │
        │  s2  │─────────────▶│              │
        └──────┘              └──────────────┘
```

**Figure 2b**

```
              15               16                17
        ┌──────┐  ┌─────────┐m' ┌─────────┐m" ┌─────────┐   ┌──────┐
        │  n   │─▶│ ECC'{n} │──▶│ DSA'{n'}│──▶│RSA'{n"} │──▶│  n'''│
        └──────┘  └─────────┘   └─────────┘   └─────────┘   └──────┘
```

**Figure 3a**

```
              18               19                20
        ┌──────┐  ┌─────────┐m" ┌─────────┐m' ┌─────────┐   ┌──────┐
        │ n''' │─▶│RSA{n'''}│──▶│ DSA{n"} │──▶│ ECC{n'} │──▶│  n   │
        └──────┘  └─────────┘   └─────────┘   └─────────┘   └──────┘
```

**Figure 3b**

30

DETERMINE SCONDARY
KEY PORTION(S) Y

31 | COMPUTE R'=Y*d$^L$ OF
LENGTH m

32 | SELECT RANDOM PRIME p
OF LENGTH AT MOST L

33 | ROUND R' TO NEAREST
MULTIPLE OF p

34 | SELECT q' SUCH
THAT R'=p*q'

35 | FIND SMALLEST NON-
NEGATIVE INTEGER t SUCH
THAT q=q'+t IS PRIME

36    IS R=p*q
OF THE FORM        **N**
Y ∥ y?

**Y**

37 | RETURN R, p, q

38 | END

**Figure 4**

13

European Patent
Office

Application Number

EP 99 30 0803

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | BANERJEE S K: "Million bits of DES encryption in the blink of an eye" IEEE 1981 INTERNATIONAL CONFERENCE ON COMMUNICATIONS, DENVER, CO, USA, 14-18 JUNE 1981, pages 40.1/1-5, vol.2, XP002108058 1981, New York, NY, USA, IEEE, USA | 1 | H04L9/30 |
| A | * page 40.1.2, left-hand column, paragraph 2; figure 3 * | 2 | |
| D,A | LENSTRA A K: "Generating RSA moduli with a predetermined portion" ADVANCES IN CRYPTOLOGY - ASIACRYPT '98. INTERNATIONAL CONFERENCE ON THE THEORY AND APPLICATIONS OF CRYPTOLOGY AND INFORMATION SECURITY. PROCEEDINGS, ADVANCES IN CRYPTOLOGY - ASIACRYPT '98. INTERNATIONAL CONFERENCE ON THE THEORY AND APPLICATION OF CRY, pages 1-10, XP002108059 ISBN 3-540-65109-8, 1998, Berlin, Germany, Sprnger-Verlag, Germany * abstract * * page 3, line 1 - page 5, line 18 * * page 5, last paragraph - page 6, line 6 * | 1-3 | |
| D,A | NACCACHE D ET AL: "Can DSA be improved?: Complexity trade-offs with the Digital Signature Standard" ADVANCES IN CRYPTOLOGY - EUROCRYPT '94. WORKSHOP ON THE THEORY AND APPLICATION OF CRYPTOGRAPHIC TECHNIQUES. PROCEEDINGS, PROCEEDINGS OF EUROCRYPT '94, PERUGIA, ITALY, 9-12 MAY 1994, pages 77-85, XP000579233 ISBN 3-540-60176-7, 1995, Berlin, Germany, Springer-Verlag, Germany * page 81, line 4 - line 27 * | 1-3 | TECHNICAL FIELDS SEARCHED (Int.Cl.6) H04L |

The present search report has been drawn up for all claims

| Place of search | Date of completion of the search | Examiner |
|---|---|---|
| THE HAGUE | 2 July 1999 | HOLPER, G |